# EUROPÄISCHE PATENTANMELDUNG

(11) **EP 0 655 200 A1**
(43) Veröffentlichungstag der Anmeldung: **31.05.1995**
(21) Anmeldenummer: 93119000.3
(22) Anmeldetag: 25.11.1993
(51) Int. Cl.: A21C 15/00

(54) **Vorrichtung zum Behandeln von insbesondere balligen Backwaren**

(71) Anmelder: Feldpausch Backtechnik GmbH, D-58849 Herscheid (DE)
(72) Erfinder: Weidlich, Roland Guido, D-58511 Lüdenscheid (DE)
(74) Vertreter: Zinngrebe, Horst, Dr.rer.nat.

(57) **Zusammenfassung**

Beschrieben wird eine Vorrichtung zum Behandeln von insbesondere balligen Backwaren (51,52,53), die einen mit einer Fördereinrichtung (16) gekoppelten Tisch (14) mit einer Beschickungsfläche (34) für Gebäckstücke und einen an den Außendurchmesser eines Gebäckstücks angepaßten und mit dem Tisch (14) verbundenen Kanal (50) aufweist, wobei neben dem Kanal (50) ein Einspritzrohr (88) in seiner Längsrichtung und quer zum Kanal (50) verschieblich anordenbar und mit einer Dosier- und Einspritzvorrichtung gekoppelt ist. Damit können fertiggebackene Gebäckstücke, beispielsweise Berliner Ballen, mit Marmelade oder dergleichen pasteusen Massen gefüllt werden.

## Beschreibung

Die Erfindung betrifft eine Vorrichtung zum Behandeln von insbesondere balligen Backwaren wie etwa Berliner Ballen (Kreppel).

Die Füllung kleinerer oder mittlerer Stückzahlen von Berliner Ballen mit Marmelade oder anderen fließfähigen oder pasteusen Massen geschieht gewöhnlich von Hand, was eine Arbeitskraft bindet und damit teuer ist. Mit der Erfindung sollen daher Maßnahmen vorgeschlagen werden, die das Einbringen einer dosierten pasteusen oder fließfähigen Masse in ein insbesondere balliges, fertiggebackenes Gebäck vereinfachen.

Dazu sieht die Erfindung eine Vorrichtung mit einem mit einer Fördereinrichtung gekoppelten Tisch mit einer Beschickungsfläche für die Gebäckstücke sowie einen an den Außendurchmesser eines Gebäckstückes angepaßten und mit dem Tisch verbundenen Kanal vor, wobei neben dem Kanal ein Einspritzrohr in seiner Längsrichtung und quer zum Kanal verschieblich angeordnet und mit einer Dosier- und Einspritzvorrichtung gekoppelt ist. Die Erfindung ermöglicht eine automatische Befüllung von Gebäckstücken mit einer gewünschten dosierten Masse. Dabei ist der Weg, den die warmen Gebäckstücke bis zum Einspritzen der Füllung zurücklegen müssen, so kurz, daß sie im noch warmen Zustand befüllt werden können. Ferner ist sichergestellt, daß die Befüllung von der weichen Seite der Gebäckstücke aus geschieht. Die Erfindung eignet sich besonders als Zusatzeinrichtung für Backmaschinen, die eine bedarfsgerechte, automatische Herstellung von gleichmäßig gefüllten Berliner Ballen erlaubt.

Als Fördereinrichtung empfiehlt sich ein elektromagnetischer Schwingantrieb, der dem Tisch eine etwa in Umfangsrichtung eines Kreises gerichtete Bewegung erteilt. Auf die Beschickungsfläche aufgebrachte Gebäckstücke wandern aufgrund der horizontalen und vertikalen Komponente der Schwingbewegung des Tisches in Richtung auf den Kanaleinlaß zu, wobei sie eventuell mit Unterstützung von speziell angeordneten Schikanen nacheinander in den Kanal gelangen. Dort wird jedes Gebäckstück vom Einspritzrohr erfaßt, welches das Gebäckstück auf seinem Vorschubweg seitlich durchdringt und unter Wirkung der Dosier- und Einspritzvorrichtung ein bestimmtes Quantum beispielsweise an Marmelade in dem Gebäckstück ablegt. Zweckmäßig ist die Beschickungsfläche auf einem Rundtisch ausgebildet und seitlich von einer runden Wange begrenzt, wobei der Kanal am Umfang des Rundtisches angeordnet ist.

Der Schwingantrieb kann mehrere Schwingelemente aufweisen, die in Umfangsrichtung des Tisches angeordnet sind. Die Schwingelemente können in einem mit Gegengewichten versehenen Hilfsrahmen gelagert sein, welcher auf einem massiven, gegebenenfalls verfahrbaren Untergestell montiert ist. Der Schwingantrieb weist ferner mit Vorteil mit dem Tisch verbundene Federpakete auf, die gegen die Hauptvorschubrichtung der Gebäckstücke geneigt sind. Das Wandern von auf die Beschickungsfläche unregelmäßig abgeladenen Gebäckstücken radial nach außen zur Wange wird dann verbessert, wenn die Beschickungsfläche die Mantelfläche eines flachen erhabenen Konus ist.

Weitere bevorzugte Ausgestaltungen der Erfindung sind in den Unteransprüchen angegeben.

Die Erfindung wird nachstehend anhand des in der beigefügten Zeichnung dargestellten Ausführungsbeispiels im einzelnen beschrieben. Es zeigen:

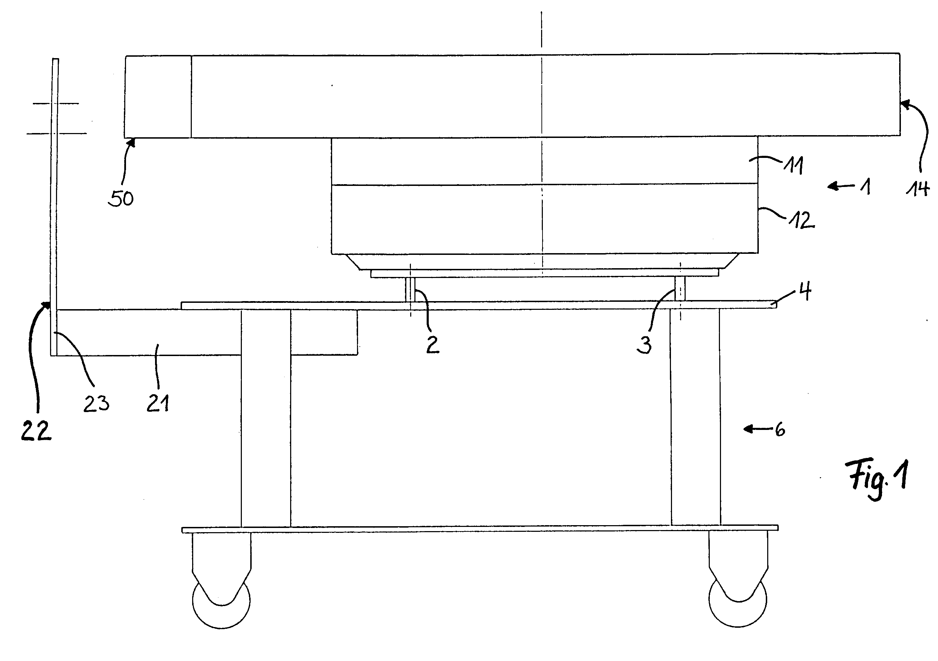

- Fig. 1:: eine schematische Seitenansicht einer mit den Merkmalen der Erfindung ausgerüsteten Vorrichtung zum Befüllen von Berliner Ballen mit Wagen;
- Fig. 2:: einen axialen Vertikalschnitt durch die Vorrichtung aus Fig. 1;

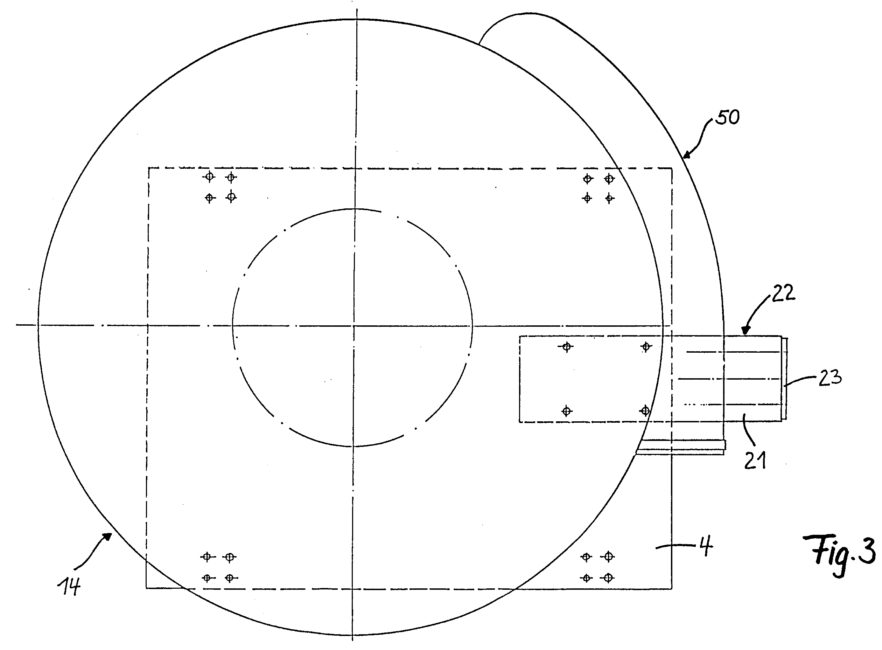

- Fig. 3:: eine schematische Draufsicht auf die Vorrichtung nach Fig. 1;
- Fig. 4:: eine schematische Darstellung des Einlaufs der Gebäckstücke aus der Schwingwanne in den Kanal der Vorrichtung nach Fig. 1; und
- Fig. 5:: eine schematische Draufsicht auf die Impfkammer mit Abteilvorrichtung, Einspritzvorrichtung und Stoppvorrichtung.

Die im ganzen mit 1 bezeichnete Vorrichtung zum Einspritzen von Marmelade oder dergleichen pasteusen Massen in Berliner Ballen ist über Füsse 2, 3 auf der Platte 4 eines fahrbaren Wagens 6 befestigt. Unterhalb der Platte 4 kann der Wagen 6 nicht dargestellte Versorgungseinrichtungen für die Vorrichtung 1 beherbergen, wie beispielsweise Vorratsgefäße für Marmelade mit angeschlossener Pumpe oder eine Stromversorgungseinheit für den noch zu erläuternden Schwingantrieb sowie eine Steuerung für den Betrieb der Vorrichtung. An der Platte 4 ist ferner ein Hilfsrahmen 22 befestigt, der einen an der Platte 4 montierten, über die Außenkontur der Schwingwanne und eines an ihr befestigten Kanals 50 vorstehenden Arm 21 aufweist. An das freie Ende des Arms 21 ist eine Stützplatte 23 angeschweißt, die sich bis zur Höhe des Kanals 50 erstreckt.

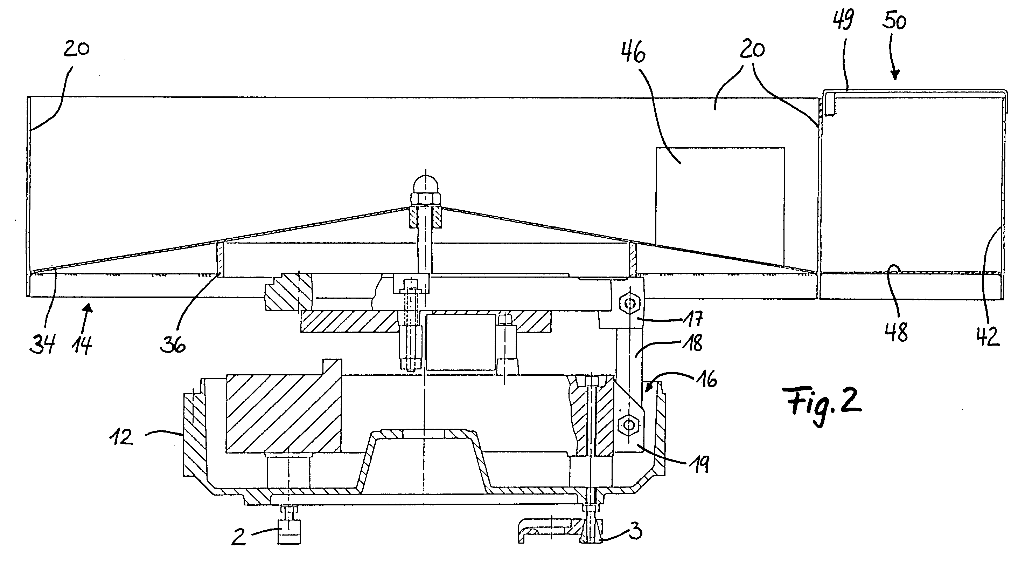

Die Vorrichtung 1 weist ein im wesentlichen zylindrisches Gehäuse 12 auf, welches auf den Füssen 2, 3 steht und über welchem eine Schwingwanne 14 angeordnet ist. Das Gehäuse 12, von welchem in Fig. 2 die obere Blende 11 abgenommen ist, umschließt einen Schwingantrieb 16, der etwa gemäß deutscher Patentschrift 28 06 331 ausgeführt sein kann. So weist der Schwingantrieb 16 mehrere Gummipakete 18 auf, deren oberes Ende 17 an der Unterseite der Schwingwanne 14 und deren unteres Ende 19 an je einem Anker eines Elektromagneten befestigt ist. Die Gummipakete 18 sind in Umfangsrichtung der runden Schwingwanne 14 gleich beabstandet verteilt und gegen die Schwingwanne 14 schräg gestellt. Nicht dargestellt sind die elektrischen Zuleitungen zwischen dem auf dem Wagen 6 befindlichen Stromversorgungsgerät und jedem der Schwingelemente, von denen jedes aus einem der erwähnten Elektromagnete nebst Anker und Gummipaket besteht.

Die Schwingwanne 14 weist eine ebene, konische und zur Mitte ansteigende Beschickungsfläche 34 auf, die am Rand von einer umlaufenden Wange 20 umfaßt ist. Die Beschickungsfläche 34 ruht auf einem Rahmen 36, an welchem die erwähnten oberen Enden der Gummipakete 18 befestigt sind. Gegebenenfalls können weitere Versteifungselemente für die Beschickungsfläche 34 vorgesehen sein.

Längs etwa einem Viertel des Umfangs der Wange 20 ist an deren Außenseite der schlanke Kanal 50 befestigt, der einen im wesentlichen horizontalen Boden 48 aufweist und dessen Inneres über einen im wesentlichen rechtwinkligen Ausschnitt 46 als Einlaßöffnung mit dem Inneren der Schwingwanne in Verbindung steht. An dem der Einlaßöffnung 46 gegenüberliegenden Ende ist der Kanal 50 offen, ist oben in Höhe des oberen Randes der Wange 20 mit einem Blech 49 über wenigstens einen Teil seiner Länge abgedeckt und hat eine lichte Weite, die etwas größer als der Außendurchmesser der von der Vorrichtung 1 zu bearbeitenden Berliner Ballen ist. Am vorderen, offenen Ende ist der Kanal 50 zu einer Impfkammer 40 ausgebildet, an welcher drei Baugruppen vorgesehen sind: ein Stopper 60, ein Abteiler 70 und eine Einspritzvorrichtung 80. Stopper 60, Abteiler 70 und Einspritzvorrichtung 80 sind an der Stützplatte 23 befestigt, die somit an den Schwingungen der Schwingwanne 14 nicht teilnimmt. Im einzelnen ist an der Stützplatte 23 eine Kolbenzylindereinheit 62 so befestigt, daß deren Kolbenstange, deren freies Ende einen langgestreckten Stiel 66 aus Weichmaterial, beispielsweise Kunststoff, trägt, durch eine Öffnung 44 in der Außenwand 42 in ausgefahrenem Zustand in den Vorschubweg der Ballen im Kanal 50 ragt und damit den Weitertransport der Ballen durch den Kanal 50 stoppt.

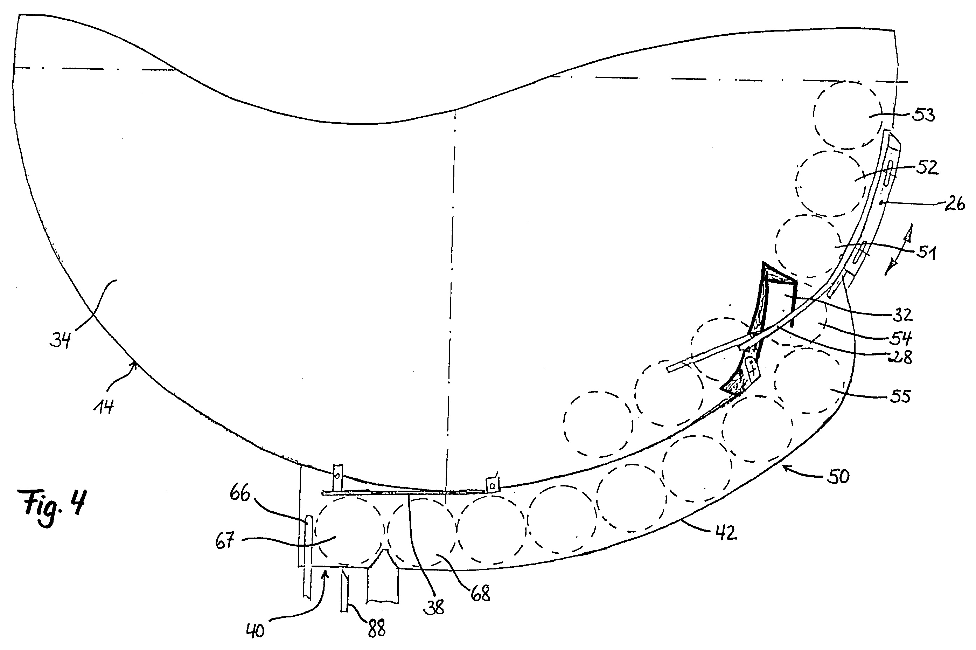

Wie insbesondere aus Fig. 4 zu erkennen ist, befindet sich der Stopper 60 mit Kolbenstange 64 und Stiel 66 in der Nähe des freien Endes der Impfkammer 40.

Horizontal neben dem Stopper 60 ist die Einspritzvorrichtung 80 angeordnet. Eine weitere Kolbenzylindereinheit 82 ist an der Stützplatte 23 befestigt, deren Kolbenstange einen Schlitten 84 trägt. Der Schlitten 84 ist mit einer Aufnahmeausnehmung 86 für eine nicht dargestellte Einspritzpistole versehen. Der Schlitten 84 kann bei Betätigung der Kolbenzylindereinheit 82 auf die Impfkammer zu sich bewegen, so daß das Einspritzrohr 88 (Fig. 4) der auf dem Schlitten 84 befestigten Einspritzpistole durch eine Öffnung 24 in der Außenwand 42 hindurch in das Innere eines in der Impfkammer 40 bereitgehaltenen Ballens eindringen kann. Die Spritzpistole ist in nicht dargestellter Weise mit der bereits erwähnten Pumpe einer Dosiervorrichtung verbunden, die im Wagen 6 untergebracht ist. Der Abstand der vom freien Ende der Impfkammer 40 entfernten Begrenzungskante der Öffnung 44 zur Mitte der Öffnung 24 entspricht etwa dem halben Ballendurchmesser.

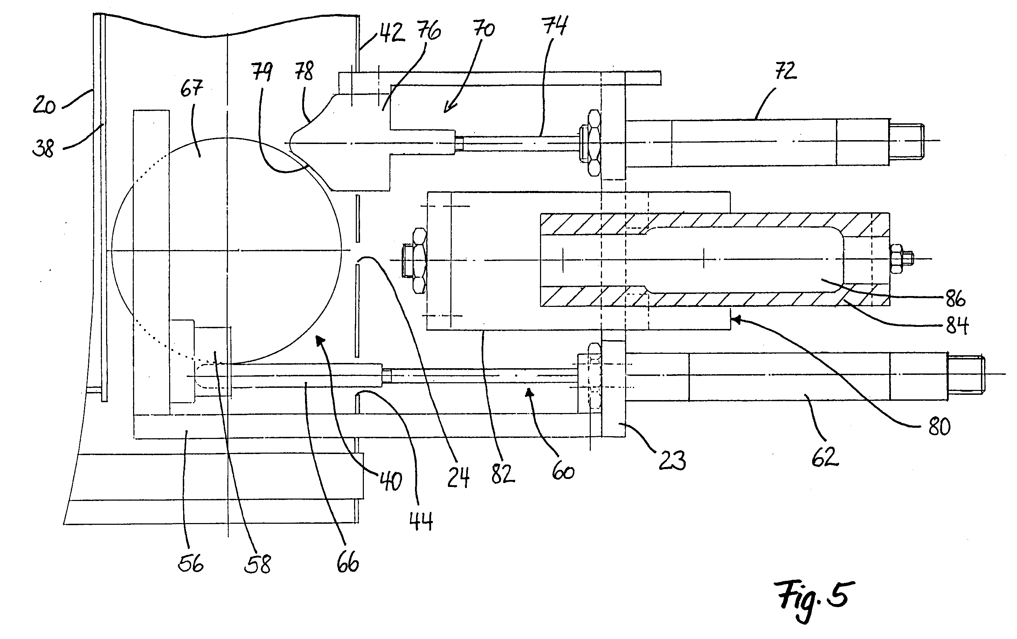

Der Abteiler 70 weist ebenfalls eine Kolbenzylindereinheit 72 auf, deren Zylinder ebenso wie die Zylinder der anderen Einheiten 62 und 82 an der Stützplatte 23 befestigt ist. Die zur Impfkammer 40 vorstehende Kolbenstange 74 trägt an ihrem freien Ende einen breiten, profilierten Abteilkörper 76, der eine gerundete Spitze sowie zwei symmetrisch zur Mittellinie des Abteilkörpers 76 einander gegenüberliegende konkave Abteilflächen 78, 79 aufweist. Der Körper 76 kann aus weichem Material, etwa Kunststoff, bestehen. Wenn die Kolbenstange 74 aus dem Zylinder der Einheit 72 vorfährt, durchdringt der Abteilkörper 76, wie in Fig. 5 dargestellt, einen entsprechend breiten Schlitz in der Wand 42. Die Abteilflächen 78, 79 sind etwa der runden Form der Ballen angepaßt. Die Öffnung 24 und zweckmäßigerweise auch die Öffnung 44 sowie der Schlitz befinden sich in einer Höhe über dem Boden 48, die etwa der halben Höhe eines zu impfenden Ballens entspricht.

Die Stützplatte 23 trägt ferner über einen Halter 56 eine Photozelleneinheit 58, die auf der Höhe des Deckels 49 angeordnet ist und deren Lichtstrahl die Impfkammer von oben nach unten kurz vor dem Stiel 66 durchquert, wobei im Boden 48 ein nicht dargestelltes lichtempfindliches Element angeordnet ist.

An der Wange 20 ist in Förderrichtung der Ballen vor der Einlaßöffnung 46 ein Schieber 26 als Schikane befestigt, mit welchem die Einlaßöffnung 46 soweit geschlossen werden kann, daß kein Ballen in den Kanal 50 gelangen kann. Ferner ist an der Wange 20 an der Einlaßöffnung 46 ein einstellbarer Höhenabweiser 28 als weitere Schikane befestigt, der sich über eine Lage Ballen erstreckt und etwa auf der unteren Ballenlage liegende weitere Ballen in das Innere der Schwingwanne 14 abweist. Die Ballen der unteren Ballenlage können unter dem Höhenabweiser dagegen ungehindert vorbeiziehen. Als weitere Schikane befindet sich in der Einlaßöffnung 46 ein Einlaufblech 32, welches in den Vorschubweg einer Ballenreihe ragt und die Ballen der Reihe durch die Einlaßöffnung 46 in den Kanal 50 ablenkt. Schließlich ist noch ein Einstellblech 38 zu erwähnen, das an der Wange 20 außen im Bereich der Impfkammer 40 befestigt ist und den Durchmesser der Impfkammer derart verengt, daß der zum Impfen in der Impfkammer 40 bereitgehaltene Ballen ohne Druck an der Außenwand 42 einerseits und gegenüber am Einstellblech 38 andererseits anliegt.

Die Vorrichtung arbeitet wie folgt: Fertiggebackene, noch warme Berliner Ballen werden ungeordnet aus einem Korb oder dergleichen Behältnis in die Schwingwanne 14 geschüttet. Nach Einschalten der Schwingantriebs versetzt dieser die Schwingwanne in Schwingbewegungen derart, daß jeder Ballen zur Ausführung eines in Umfangsrichtung gemäß Fig. 4 in Uhrzeigerrichtung gerichteten kleinen Hopsers veranlaßt wird. Durch die Konizität der Beschickungsfläche 34 sammeln sich daraufhin die Ballen in der Nische zwischen Außenperipherie der Beschickungsfläche 34 und Wange 20 und laufen in der Schwingwanne 14 in Uhrzeigerrichtung um. Längs der Wange 20 bildet sich daher eine lineare Reihe von Ballen, von denen in Fig. 4 die in der Nähe der Einlaßöffnung 46 befindlichen Ballen mit 51, 52, 53 bezeichnet sind. Bei zurückgezogenem Schieber 26 ist die Einlaßöffnung 46 freigegeben und das Einlaufblech 32 ragt in den Vorschubweg der Ballen längs der Wange 20, so daß die Ballen in den Kanal 50 durch die Einlaßöffnung 46 eintreten, wie das an den Ballen 54, und 55 in Fig. 4 dargestellt ist. Gleichzeitig sorgt der Höhenabweiser 28 dafür, daß nur eine einlagige Reihe von Ballen in den Kanal 50 eindringen kann. Die Ballen werden durch die Schwingbewegung, an der der Kanal 50 teilnimmt, längs des Kanals 50 weitergefördert, bis der vorderste Ballen 67 in die Impfkammer 40 gelangt und gegen den Stiel 66 des Stoppers 60 anliegt. Das Vorhandensein des Ballens 67 wird von dem erwähnten Photoelement durch die Unterbrechung des von der Photozelleneinheit 58 ausgehenden Lichtstrahls festgestellt und der oben erwähnten nicht dargestellten Steuerung durch entsprechende elektrische Ausgangssignale mitgeteilt. Die Steuerung veranlaßt daraufhin eine Betätigung der Kolbenzylindereinheit 72, so daß die Kolbenstange 74 mit Abteilkörper 76 durch die Öffnung in der Wand 42 so weit in die Impfkammer vorfährt, wie das in Fig. 5 dargestellt ist. Die Abteilfläche 79 liegt dann nahe am Ballen 67 an, der durch den Abteilkörper 76 von dem nachfolgenden Ballen 68 getrennt wird. Dadurch wird der Ballen 67 trotz der Schwingbewegungen schonend in der Impfkammer 40 festgehalten.

Nachdem der Abteilkörper 76 die dargestellte vordere Endlage eingenommen hat, veranlaßt die Steuerung die Kolbenzylindereinheit 82 den Schlitten 84 mit auf ihm befestigter Spritzpistole soweit in Richtung auf den Ballen 67 vorzufahren, daß das Einspritzrohr 88 in die Mitte des Ballens 67 eindringt, dort eine vorproportionierte Menge an Marmelade ablädt und wieder in die Ausgangsstellung zurückfährt. Nach Abschluß dieser Operation veranlaßt die Steuerung, daß die Kolbenzylindereinheit 62 den Stopperstiel 66 zurückfährt, woraufhin der Ballen 67 aufgrund der Schwingbewegungen aus dem freien Ende ausgegeben wird und in einen bereitgestellten Korb fallen kann. Sobald der Ballen 67 die Impfstation 40 verlassen hat, ist der Lichtweg von der Photozelleneinheit 58 zu dem Photosensor frei, so daß dieser das Fehlen des Ballens der Steuerung signalisiert. Daraufhin veranlaßt die Steuerung ein erneutes Vorfahren des Stopperstils 66 in die in Fig. 5 dargestellte Stellung. Danach veranlaßt die Steuerung durch Betätigung der Kolbenzylindereinheit 72, daß der Abteilkörper 76 bis hinter die Wand 42 zurückfährt und den Vorschubweg für den nachfolgenden Ballen 68 bis zum Stopper 60 freigibt. Die Anwesenheit des nachfolgenden Ballens 68 am Stopperstiel 66 wird wieder vom Photoelement festgestellt, woraufhin die Steuerung ein erneutes Vorfahren des Abteilkörpers 76 veranlaßt. Danach erfolgt das Einspritzen von Marmelade in den Ballen 68 wie zuvor anhand des Ballens 67 beschrieben.

## Patentansprüche

1. Vorrichtung zum Behandeln von insbesondere balligen Backwaren (51, 52, 53) gekennzeichnet durch einen mit einer Fördereinrichtung (16) gekoppelten Tisch (14) mit einer Beschickungsfläche (34) für Gebäckstücke, und durch einen an den Außendurchmesser eines Gebäckstücks angepaßten und mit dem Tisch (14) verbundenen Kanal (50), wobei neben dem Kanal ein Einspritzrohr (88) in seiner Längsrichtung und quer zum Kanal verschieblich anordenbar und mit einer Dosier- und Einspritzvorrichtung gekoppelt ist.

2. Vorrichtung nach Anspruch 1, dadurch gekennzeichnet, daß die Fördereinrichtung ein elektromagnetischer Schwingantrieb (16) ist, der dem Tisch (14) eine etwa in Umfangsrichtung eines Kreises gerichtete Bewegung erteilt.

3. Vorrichtung nach Anspruch 1 oder 2, dadurch gekennzeichnet, daß die Beschickungsfläche (34) auf einem Rundtisch ausgebildet ist und seitlich von einer runden Wange (20) begrenzt ist, wobei der Kanal (50) am Umfang des Rundtisches angeordnet ist.

4. Vorrichtung nach einem der Ansprüche 2 bis 4, dadurch gekennzeichnet, daß der Schwingantrieb (16) mehrere Schwingelemente aufweist, die in Umfangrichtung des Tisches angeordnet sind.

5. Vorrichtung nach Anspruch 4, dadurch gekennzeichnet, daß die Schwingelemente in einem mit Gegengewichten versehenen Hilfsrahmen gelagert sind, welcher auf einem massiven, gegebenenfalls verfahrbaren Untergestell (6) montiert ist.

6. Vorrichtung nach einem der Ansprüche 2 bis 5, dadurch gekennzeichnet, daß der Schwingantrieb mit dem Tisch (14) verbundene Federpakete aufweist, die gegen die Hauptvorschubrichtung der Gebäckstücke geneigt sind.

7. Vorrichtung nach einem der vorstehenden Ansprüche, dadurch gekennzeichnet, daß die Beschickungsfläche (34) die Mantelfläche eines flachen, erhabenen Konus ist.

8. Vorrichtung nach einem der vorstehenden Ansprüche, dadurch gekennzeichnet, daß an dem Kanal (50) vor dem Einspritzrohr (88) eine Abteilvorrichtung (70) angeordnet ist.

9. Vorrichtung nach einem der vorstehenden Ansprüche, dadurch gekennzeichnet, daß hinter dem Einspritzrohr (88) an dem Kanal (50) ein Stopper (60) angeordnet ist.
